# EUROPÄISCHE PATENTSCHRIFT

(11) **EP 0 879 495 B1**
(45) Veröffentlichungstag und Bekanntmachung des Hinweises auf die Patenterteilung: **27.03.2002**
(21) Anmeldenummer: 97900970.1
(22) Anmeldetag: 09.01.1997
(51) Int. Cl.: H02H 9/04, H01H 9/16

(54) **ELEKTRONISCHE SCHALTMAGNETANSTEUERUNG ZUM AUSSCHALTEN EINES SCHÜTZES**
ELECTRONIC SWITCH MAGNET CONTROL SYSTEM FOR SWITCHING OFF A CONTACTOR
SYSTEME DE COMMANDE ELECTRONIQUE A AIMANT DE COMMUTATION POUR LA MISE HORS CIRCUIT D'UN CONTACTEUR

(30) Priorität: 06.02.1996 DE 19605973
(43) Veröffentlichungstag der Anmeldung: 25.11.1998
(73) Patentinhaber: Moeller GmbH, 53115 Bonn (DE)
(72) Erfinder: NÜRENBERG, Klaus-Dieter, D-53639 Königswinter (DE)
(74) Vertreter: Mäder, Winfried
(86) Internationale Anmeldenummer: EP9700053
(87) Internationale Veröffentlichungsnummer: WO9729532

(56) Entgegenhaltungen:
- EP-A- 0 163 349
- DE-A- 3 822 342

## Beschreibung

### Technisches Gebiet

Die Erfindung betrifft eine elektronische Schaltmagnetansteuerung für Schütze, wobei das Schütz eine Spule und einen Sensor hat, und mit dem Sensor die Position des Ankers bestimmbar ist.

### Stand der Technik

Zum Ausschalten eines Schützes wird dessen Spule von der Gleichspannungs-Versorgungsquelle abgetrennt. Um dabei Spannungsspitzen bzw. Funkenschlag zu vermeiden, wird parallel zur Spule ein Freilaufkreis, bestehend aus einer Freilaufdiode angeordnet, in dem der Spulenstrom nach dem Abtrennen weiter fließen kann, wobei die in der Spule befindliche Energie nur relativ langsam abgebaut wird. Ein Grund hierfür ist die relative kleine Durchlaßspannung einer normalen Diode. Dies führt dazu, daß das Schütz erst nach ca. 50-70 ms abfällt.

Aus der EP 0 387 730 B1 ist eine elektronische Schützschnellabschaltung bekannt, die einen abschaltbaren Freilaufkreis und parallel zu dem Freilaufkreis eine Reihenschaltung aus einer Transient-Spannungsunterdrückungsdiode und einer Rückkopplungsdiode hat. Durch einen Schalter im Freilaufkreis ist dieser ein- und ausschaltbar. Die Spule des Schützes wird dabei mit getaktetem Gleichstrom betrieben, wobei während der Anzugs- oder Haltephase des Schützes der Freilaufkreis eingeschaltet ist, damit während der Taktregelung der Strom in der Spule weiterfließen kann und es nicht zu einem Abfallen des Magnetankers kommt. Wird das Schütz abgeschaltet, so wird gleichzeitig auch der Freilaufkreis mittels des Schalters, der ein Transistor sein kann, abgeschaltet, so daß der Strom nur noch durch die Reihenschaltung aus Transient-Spannungsunterdrückungdiode und Rückkopplungsdiode weiterfließen kann. Mittels der Transient-Spannungsunterdrückungsdiode wird die gesamte Spannungsenergie in Wärme umgewandelt. Durch die Wahl der Durchbruchspannung kann dabei die Abschaltzeit des Schützes beeinflußt werden. Mit kürzeren Abschaltzeiten steigt jedoch die von der Transient-Spannungsunterdrückungsdiode aufzunehmende Leistung drastisch an und kann bei Spitzenleistungen im Kilowatt-Bereich liegen. Die DE 43 44 126 A1 zeigt eine leicht modifizierte elektronische Schützschnellabschaltung, wobei zusätzlich ein Kondensator vorgesehen ist, mit dem energiereiche Spannungsspitzen intern abgebaut werden und verhindert wird, daß diese zurück ins Netz gespeist werden.

Aus der DE 44 09 010 A1 ist eine Schaltvorrichtung bekannt, bei der mittels eines Sensors die Position des beweglichen Organs, insbesondere des Ankers eines Schützes, während des Schaltvorganges bestimmbar ist. Der Sensor ist dabei ein Potentiometer, bestehend aus einem längsgestreckten Fühlerelement und einem am Anker befestigten beweglichen Läufer, welcher sich auf dem Fühlerelement abstützt. Mittels der ermittelten Position des beweglichen Organs des Schützes wird während des Schaltvorganges der Spulenstrom über die gesamte Verschiebungsstrecke gesteuert, womit zum einen die Schließkraft des Schützes erhöht und zum anderen die elektrische und mechanische Haltbarkeit der Vorrichtung verbessert wird. Zur Steuerung des Spulenstroms ist der Spule ein Stromsensor in Reihe geschaltet. Der Spulenstrom wird dabei in Abhängigkeit der Differenz zwischen Soll-Spulenstrom und gemessenem Ist-Spulenstrom mittels einer Impulsmodulations-Schaltung gesteuert, wobei der Spulenstrom vom Niveau der Impulsgrößenmodulation abhängt.

Eine weitere Schaltmagnetansteuerung ist aus der DE 38 22 342 C2 bekannt, die eine Reihe von Lichtschranken, bestehend aus Reihen Fotodioden und lichtemittierenden Dioden, aufweist, welche auf beiden Seiten des Ankers angeordnet sind. Der Anker hat eine Lichtdurchgangsmarkierung, die den Lichtpfad der einzelnen Lichtschranken beim Verfahren des Ankers einzeln und nacheinander durchläßt. Hierdurch kann die Position des Ankers bzw. der Schaltkontakte genauestens bestimmt werden. Durch Verarbeitung der Positionssignale der einzelnen Lichtschranken ist es möglich, ein ungleichmäßiges Schalten des Schützes über alle drei Phasen des zu schließenden und zu öffnenden Stromkreises hinweg zu erkennen.

Alle diese Schützsteuerungen haben den Nachteil, daß die Schütze beim Ausschalten extremen mechanischen Belastungen ausgesetzt sind, sobald schnelle Abfallzeiten des Schützes gefordert sind. Durch ein schnelles Abfallen wird der Anker stark beschleunigt und wird durch das Gehäuse des Schützes abrupt abgebremst. Hierdurch kommt es zu einem schnellen Verschleiß der mechanischen Bauteile des Schützes.

### Darstellung der Erfindung

Aufgabe der Erfindung ist es, eine Schützansteuerung bereitzustellen, die die mechanische Belastung des Schützes auch bei kurzen Abfallzeiten herabsetzt und ein Nachprellen des Ankers bzw. der Schaltkontakte in der AUS-Stellung verhindert.

Erfindungsgemäß wird diese Aufgabe dadurch gelöst, daß in Abhängigkeit von der Position des Ankers voneinander verschiedene Freilaufkreise parallel zur Spule schaltbar sind. Hierdurch wird vorteilhaft erreicht, daß am Anfang des Abschaltvorganges die Energie der Schützspule mittels einer geeigneten Beschaltung des Freilaufkreises möglichst schnell abgebaut wird, wodurch ein schnelles Abfallen des Ankers erzielt wird.

Wird die Energie der Schützspule schnell abgebaut, so wird auch der Anker mit den mit ihm wirkverbundenen Schaltkontakten stark beschleunigt. Bei herkömmlichen Schützen wurde die kinetische Energie vom Gehäuse des Schützes aufgenommen. Mittels eines anders beschalteten Freilaufkreises läßt sich jedoch der Anker durch die Restenergie der Spule abbremsen, so daß ein Prellen des Ankers bzw. der Schaltkontakte vermieden werden kann.

Die Freilaufkreise werden vorteilhaft durch mehrer elektronische Bauteile gebildet, wobei die Freilaufkreise nacheinander oder in Kombination gleichzeitig parallel zur Spule schaltbar sind, wodurch die Ankergeschwindigkeit je nach Position genau steuerbar ist. Es ist jedoch auch möglich, nach Zuschaltung eines weiteren Freilaufkreises den vorhergehenden Freilaufkreis von der Spule abzutrennen. Die elektronischen Bauteile sind dabei vorteilhaft Dioden, Z-Dioden, insbesondere aufgeladene Kondensatoren oder Widerstände. Um eine besonders schnelle Abfallzeit zu erzielen, bilden vorteilhaft eine Diode und eine Z-Diode einen Freilaufkreis, wobei die Diode in Durchlaßrichtung und die Z-Diode in Sperrichtung geschaltet ist. Auch kann die Z-Diode durch eine Transient-Spannungsunterbrückungsdiode ersetzt werden, wodurch noch schnellere Abfallzeiten realisierbar sind.

Um die Freilaufkreise nacheinander parallel zur Spule schalten zu können ist, in jedem Freilaufkreis ein Schaltelement, insbesondere ein Schalter oder ein Transistor, in Reihe zu den elektronischen Bauteilen geschaltet. Die Schaltstellung jedes Schaltelements kann vorteilhaft mittels einer Steuerung, insbesondere der Schaltmagnetansteuerung, vorgegeben werden.

Die Position des Ankers läßt sich mittels eines analogen Sensors, wie z.B. einem Schiebepotentiometer ermitteln. Es scheint jedoch zweckmäßig, anstatt des analogen Wegsensors einen digitalen Wegsensor zu verwenden, da hierdurch elektronische Bauteile eingespart werden können. Der digitale Wegsensor hat dabei insbesondere eine Anzahl von n Sensoren, insbesondere mechanische Schalter, Lichtschranken, Halldetektoren oder Induktionsschalter, die entlang der vom Anker bzw. von den Schaltkontakten zurückzulegenden Hubstrecke angeordnet sind und mittels derer die Position des Ankers bzw. der Schaltkontakte diskret bestimmbar ist, wobei mindestens einem Sensor ein Freilaufkreis zugeordnet ist. Sobald ein Sensor den Anker oder dessen Markierung detektiert, wird ein neuer Freilaufkreis der Spule parallel geschaltet bzw. ein vorhergehender Freilaufkreis abgeschaltet. Die Sensoren können an den für den Abschaltvorgang relevanten Stellen angeordnet sein.

### Kurze Beschreibung der Zeichnungen

Nachfolgend wird die Erfindung anhand von Zeichnungen näher erläutert. Es zeigen
- Figur 1:: eine schematische Darstellung eines elektronisch gesteuerten Schützes in der EIN-Stellung;
- Figur 2:: ein Weg-Zeit-Diagramm zur Darstellung eines Ausschaltvorgangs;
- Figur 3:: eine schematische Darstellung eines elektronisch gesteuerten Schützes während des Abschaltvorgangs;
- Figur 4:: ein Schaltbild für die Beschaltung der zuschaltbaren Freilaufkreise;
- Figur 5:: ein Weg-Zeit-Diagramm zur Darstellung des Abschaltvorgangs mit unterschiedlichen Beschaltungen;
- Figur 6:: ein Flußdiagramm eines Programms zur Steuerung des Abschaltvorgangs eines elektronisch gesteuerten Schützes nach Figur 1.

### Bester Weg zur Ausführung der Erfindung

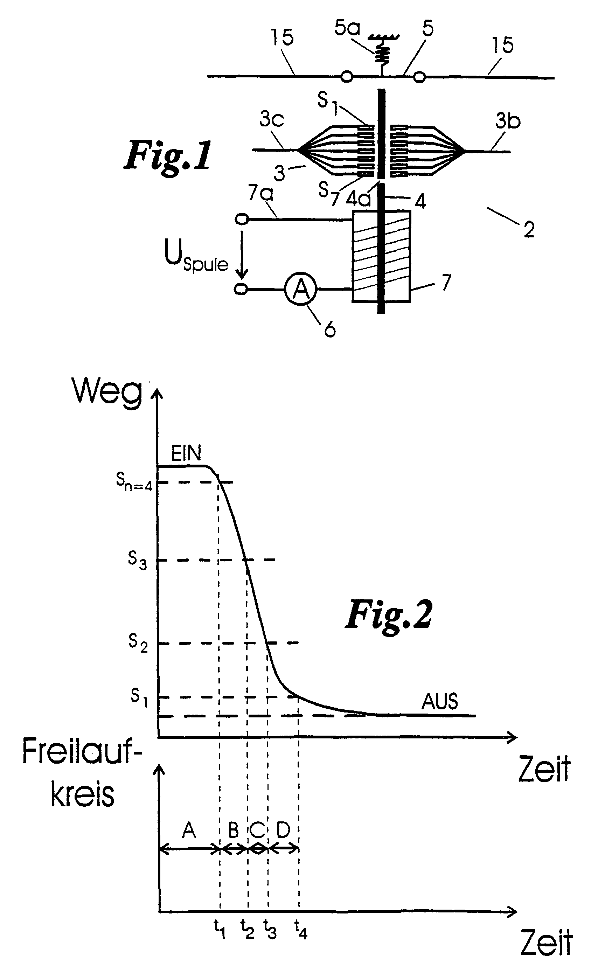

Die Figur 1 zeigt ein elektronisch gesteuertes Schütz 2, mittels dem mindestens eine Phase 15 eines Schaltkreises unterbrochen oder geschlossen werden kann. In Figur 1 ist der Schaltkontakt 5 des Schützes 2 in geschlossener Stellung. Der durch eine Kontaktfeder 5a beaufschlagte Schaltkontakt 5 ist mit einem Anker 4 in loser Verbindung, der mittels der Spule 7 verfahrbar ist. Durch Anlegen einer Gleichspannung U_{Spule} an den Anschlußdrähten 7a der Spule 7 fließt in der Spule 7 ein Ist-Spulenstrom Iᵢₛₜ, welcher ein Magnetfeld erzeugt, das den Anker 4 in die Spule 7 hineinzieht. Zwischen der EIN-Stellung (Fig. 2a) und der AUS-Stellung (Fig. 1) legt der Anker 4 die Hubstrecke H zurück. Der Anker 4 hat dabei eine Markierung 4a, welche mittels des aus den Sensoren S, 3a bestehenden Wegsensors 3 detektiert wird, sobald die Markierung 4a an einem der Sensoren S, 3a vorbeifährt. Dabei können die Sensoren S, 3a Lichtschranken sein, wobei jeweils einem Photodetektor S genau eine Lichtquelle 3a gegenüberliegend angeordnet ist. Die Markierung 4a kann eine Ausnehmung oder Bohrung sein, so daß das Licht einer Lichtquelle 3a von dem jeweils zugehörigen Photodetektor S detektiert wird, sobald sich die Markierung 4a genau zwischen der Lichtquelle 3a und dem zugehörigen Sensor S befindet. Die Photodetektoren S und die Lichtquellen 3a sind mittels der Zuführungsleitungen 3b, 3c mit der nicht dargestellten Schaltmagnetansteuerung in Verbindung.

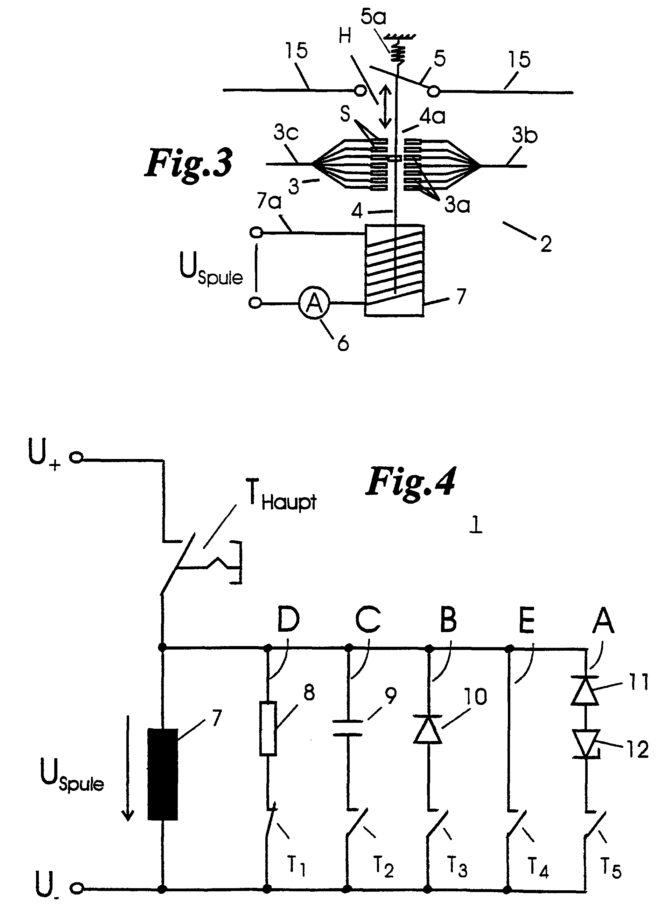

Figur 2 zeigt ein Weg-Zeit-Diagramm der Markierung 4a des Ankers 4. Wird die Spule 7 von der Spannungsversorgung getrennt, so fällt der Anker 4 nach einer bestimmten Zeit t₁ ab. Der Anker 4 wird daraufhin in Richtung der AUS-Stellung beschleunigt. Dabei gibt die Markierung 4a den Lichtpfad der Lichtschranken S, 3a nacheinander frei, wodurch diese Signale an die Schaltmagnetansteuerung 1 senden. Die Schaltmagnetansteuerung schaltet daraufhin den zu dem jeweiligen Signale aussendenden Sensor bzw. Photodetektor Sᵢ, d.h. S₁ bis S₄, gehörenden Freilaufkreis A, B, C oder D der Spule 7 zum jeweiligen Zeitpunkt tᵢ, d.h. t₁ bis t₄, parallel. Der Anker 4 wird dabei abgebremst und gelangt ohne Prellen in die AUS-Stellung. Aus Figur 3 ist ersichtlich, wie die Markierung 4a durch den Anker 4 an den Sensoren S entlang verfahren wird.

Die Figur 4 zeigt als Teil der Schaltmagnetansteuerung 1 die Beschaltung der Freilaufkreise A, B, C, D und E. Die Spule ist zwischen die Klemmen einer Versorgungsspannung U₊, U geschaltet, wobei die Spule 7 mittels eines Hauptschalters T_{Haupt} von der Versorgungsspannung abkoppelbar ist. Die Freilaufkreis A, B, C, D und E sind parallel zur Spule 7 schaltbar, wobei in jedem Freilaufkreis A, B, C, D und E jeweils ein Schalter Tᵢ, d.h. T₁ bis T₅, angeordnet ist, mit dem der Freilaufkreis zur Spule 7 parallel schaltbar oder von der Spule 7 trennbar ist. Wird die Spule 7 mittels des Hauptschalters T_{Haupt} von der Versorgungsspannung abgetrennt, so muß der Strom in der Spule 7 weiterfließen können, um Lichtbögen bzw. Spannungsüberschläge zu unterdrücken. Hierzu wird einer der Freilaufkreise A, B, C, D und E mittels des zugehörigen Schalters Tᵢ parallel zur Spule 7 geschaltet.

Es hat sich herausgestellt, daß z.B. eine Beschaltung der Spule 7 in der Reihenfolge A-E-B-C eine schnelle Abfallzeit ermöglicht, wobei gleichzeitig der Anker während der Bewegung in Richtung der AUS-Stellung von der vom Weg abhängigen Beschaltung der Freilaufkreise genügend abgebremst wird, wodurch ein Prellen verhindert wird. Andere Reihenfolgen der Beschaltung sind denkbar und je nach Gegebenheit zweckmäßig.

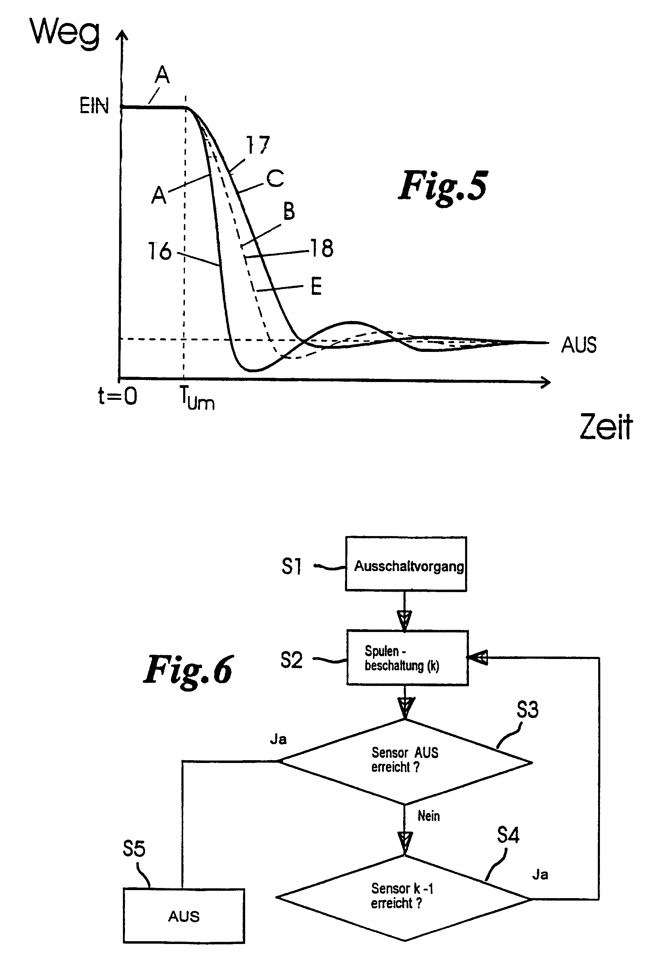

Das Weg-Zeit-Diagramm in Figur 5 macht deutlich, welche Auswirkung die unterschiedliche Beschaltung des Freilaufkreises auf die Geschwindigkeit des Ankers 4 beim Ausschaltvorgang hat. Wird die Spule 7 mittels des Hauptschalters T_{Haupt} von der Versorgungsspannung getrennt, so vergeht eine gewisse Zeit T_{UM}, bis zu der sich der Anker 4 noch nicht bewegt und die Beschaltung A wirksam ist. Sobald sich der Anker 4 in Richtung der AUS-Stellung bewegt, wird die Bewegung bzw. das Abfallen bei t=T_{UM} vom Wegsensor 3 erkannt. Bei T_{UM} wird daraufhin die Beschaltung des Freilaufkreises der Spule geändert. In dem Weg-Zeit-Diagramm sind die drei Kurvenverläufe 16, 17 und 18 eingezeichnet, wobei bei 16 nur die Beschaltung A wirksam bleibt. Wird dagegen bei T_{UM} eine Diode (Beschaltung B) aks Freilaufkreis parallel zur Spule 7 geschaltet, so wird die in der Spule 7 gespeicherte Energie etwas langsamer abgebaut (Kurve 17), wodurch der Anker 4 langsamer beschleunigt wird und dadurch eine geringere maximale Geschwindigkeit erreicht, wodurch das Prellen im Vergleich zum Kurvenverlauf 16 geringer ist. Die Kurve 18 zeigt eine Beschaltungmit einem aufgeladenen Kondensator, wodurch die Energie noch langsamer abgebaut wird und der Anker 4 relativ sanft in die AUS-Stellung verfährt.

Ein Programm zum Abschalten des Schützes 2 für die erfindungsgemäße Schaltmagnetansteuerung 1 ist in Figur 6 dargestellt. Sobald-der Ausschaltvorgang eingeleitet worden ist (Schritt S1) und die Markierung 4a den ersten Sensor S₁ passiert, wird in Schritt S2 ein entsprechender Freilaufkreis parallel zur Spule 7 geschaltet. Der Anker 4 wird weiter in Richtung der AUS-Position verfahren, wodurch die Markierung 4a den nächsten Sensor S2 erreicht. Ist dies der Fall (Schritt S4), so wird eine neue Spulenbeschaltung bzw. ein neuer Freilaufkreis der Spule 7 parallel geschaltet. Hat die Markierung 4a den letzten Sensor Sₙ passiert, so wird dies im Schritt S3 erkannt und der Ausschaltvorgang beendet.

## Patentansprüche

1. Elektronische Schaltmagnetansteuerung für Schütze, wobei das Schütz (2) eine Spule (7) und einen Wegsensor (3) hat, und mit dem Wegsensor (3) die Position des Ankers (4) bestimmbar ist, **dadurch gekennzeichnet, daß** in Abhängigkeit von der Position des Ankers (4) voneinander verschiedene Freilaufkreise (A; B; C; D; E) parallel zur Spule (7) schaltbar sind.

2. Elektronische Schaltmagnetansteuerung nach Anspruch 1, **dadurch gekennzeichnet, daß** mehrere elektronische Bauteile die Freilaufkreise (A; B; C; D) bilden und die Freilaufkreise (A; B; C; D; E) nacheinander oder in Kombination gleichzeitig parallel zur Spule (7) schaltbar sind.

3. Elektronische Schaltmagnetansteuerung nach Anspruch 2, **dadurch gekennzeichnet, daß** die elektronischen Bauteile Dioden (10; 11), Z-Dioden (12), insbesondere aufgeladene Kondensatoren (9) oder Widerstände (8) sind.

4. Elektronische Schaltmagnetansteuerung nach einem der vorherigen Ansprüche, **dadurch gekennzeichnet, daß** im Freilaufkreis (A; B; C; D; E) ein Schaltelement (T₁; T₂; T₃; T₄; T₅), insbesondere ein Schalter oder ein Transistor ist, mittels dem der Freilaufkreis (A; B; C; D; E) parallel zur Spule (7) schaltbar ist.

5. Elektronische Schaltmagnetansteuerung nach Anspruch 4, **dadurch gekennzeichnet, daß** die Schaltstellung des Schaltelements (T₁; T₂; T₃; T₄; T₅) jedes Freilaufkreises (A; B; C; D; E) mittels einer Steuerung, insbesondere der Schaltmagentansteuerung (1) vorgebbar ist.

6. Elektronische Schaltmagnetansteuerung nach einem der vorherigen Ansprüche, **dadurch gekennzeichnet, daß** der Wegsensor (3) eine Anzahl von n Sensoren (s_{i=1..n}) insbesondere mechanische Schalter, Lichtschranken, Halldetektoren oder Induktionsschalter hat, die entlang der vom Anker (4) bzw. von den Schaltkontakten (5) zurückzulegenden Hubstrecke (H) angeordnet sind, und mittels derer die Position des Ankers (4) bzw. der Schaltkontakte (5) diskret bestimmbar ist, wobei mindestens einem Sensor Sᵢ ein Freilaufkreis (A; B; C; D; E) zugeordnet ist.

7. Elektronische Schaltmagnetansteuerung nach Anspruch 6, **dadurch gekennzeichnet, daß** durch das Verfahren des Ankes (4) die entlang der Hubstrecke (H) angeordneten Sensoren (Sᵢ) des Wegsensors (3) nacheinander jeweils nach Erkennung des Ankers (4) oder nach Erkennung entsprechender Markierungen, Durchlässe, Vorsprünge oder Vertiefungen (4a, 5a) des Ankers (4) jeweils ein bestimmtes Signal an die Schaltmagnetansteuerung (1) senden.

8. Elektronische Schaltmagnetansteuerung nach einem der vorherigen Ansprüche, **dadurch gekennzeichnet, daß** der Wegsensor (3) ein Potentiometer ist, dessen beweglicher Abnehmer mit dem Anker (4) verbunden ist, wobei die am Potentiometer abgegriffene Spannung ein Maß für die Position des Ankers (4) ist.

9. Verfahren zum Abschalten eines elektronischen Schützes mittels der elektronischen Schaltmagnetansteuerung nach einem der vorherigen Ansprüche, **dadurch gekennzeichnet, daß** die Schaltmagnetansteuerung (1) den Abschaltvorgang des Schützes (2) startet, sobald das Einschaltsignal am Eingang der Schaltmagnetansteuerung (1) wegfällt.

10. Verfahren zum Abschalten eines elektronischen Schützes nach Anspruch 9, **dadurch gekennzeichnet, daß** zu Beginn des Abschaltvorgangs ein erster Freilaufkreis (A) zur Spule (7) parallel geschaltet ist, der die in der Spule (7) gespeicherte Energie schnell abführt, und daß sobald der erste Sensor (S₁) oder einer der nachfolgenden Sensoren (Sᵢ) den Anker (4) bzw. die Schaltkontakte (5) oder deren Markierungen (4a, 5a) detektiert, ein weiterer Freilaufkreis (B; C; D), bestehend aus einer Diode (10), einem insbesondere geladenem Kondensator (9) und/oder einem Widerstand (8) parallel zum ersten oder an die Stelle des ersten Freilaufkreises (A) geschaltet wird.

## Claims

1. Electronic switching magnet drive for contactors, with the contactor (2) having a coil (7) and a motion sensor (3), by means of which motion sensor (3) the position of the armature (4) can be determined, **characterized in that** mutually different freewheeling circuits (A; B; C; D; E) can be connected in parallel with the coil (7) depending on the position of the armature (4).

2. Electronic switching magnet drive according to Claim 1, **characterized in that** a number of electronic components form the freewheeling circuits (A; B; C; D), and the freewheeling circuits (A; B; C; D; E) can be connected in parallel with the coil (7) successively or in combination at the same time.

3. Electronic switching magnet drive according to Claim 2, **characterized in that** the electronic components are diodes (10; 11), zener diodes (12), in particular charged capacitors (9) or resistors (8).

4. Electronic switching magnet drive according to one of the preceding claims, **characterized in that** a switching element (T₁; T₂; T₃; T₄; T₅), in particular a switch or a transistor, is connected in the freewheeling circuit (A; B; C; D; E), and by means of which the freewheeling circuit (A; B; C; D; E) can be connected in parallel with the coil (7).

5. Electronic switching magnet drive according to Claim 4, **characterized in that** the switch position of the switching element (T₁; T₂; T₃; T₄; T₅) of each freewheeling circuit (A; B; C; D; E) can be predetermined by means of a controller, in particular by the switching magnet drive (1).

6. Electronic switching magnet drive according to one of the preceding claims, **characterized in that** the motion sensor (3) has a number n of sensors (S_{i=1..n}), in particular mechanical switches, light barriers, Hall detectors or induction switches, which are arranged along the distance (H) travelled by the armature (4) and by the switching contacts (5), and by means of which the position of the armature (4) and/or of the switching contacts (5) can be determined discretely, with at least one sensor Sᵢ having an associated freewheeling circuit (A; B; C; D; E).

7. Electronic switching magnet drive according to Claim 6, **characterized in that**, due to the movement of the armature (4), the sensors (Sᵢ), which are arranged along the distance (H), of the motion sensor (3) each successively transmit a specific signal to the switching magnet drive (1) after identification of the armature (4) or after identification of corresponding markings, apertures, projections or depressions (4a, 5a) in the armature (4).

8. Electronic switching magnet drive according to one of the preceding claims, **characterized in that** the motion sensor (3) is a potentiometer, whose moving pick-off is connected to the armature (4), with the voltage which is picked off from the potentiometer being a measure of the position of the armature (4).

9. Method for switching off an electronic contactor by means of the electronic switching magnet drive according to one of the preceding claims, **characterized in that** the switching magnet drive (1) starts the process of switching off the contactor (2) as soon as no switch-on signal is present at the input of the switching magnet drive (1).

10. Method for switching off an electronic contactor according to Claim 9, **characterized in that**, at the start of the switching-off process, a first freewheeling circuit (A) is connected in parallel with the coil (7) and quickly dissipates the energy stored in the coil (7), and **in that**, as soon as the first sensor (S₁) or one of the subsequent sensors (Sᵢ) detects the armature (4), the switching contacts (5) or their markings (4a, 5a), a further freewheeling circuit (B; C; D), comprising a diode (10), a capacitor (9), in particular a charged capacitor, and/or a resistor (8) is connected in parallel with or instead of the first freewheeling circuit (A).

## Revendications

1. Système de commande électronique à aimant de commutation pour des contacteurs, le contacteur (2) étant muni d'une bobine (7) et d'un capteur de déplacement (3), et la position de l'induit (4) pouvant être déterminée à l'aide du capteur de déplacement (3), **caractérisé en ce que** différents circuits de roue libre (A, B, C, D, E) peuvent être connectés parallèlement à la bobine (7) en fonction de la position de l'induit (4).

2. Système de commande électronique à aimant de commutation selon la revendication 1, **caractérisé en ce que** plusieurs composants électroniques forment les circuits de roue libre (A, B, C, D) et que les circuits de roue libre (A, B, C, D, E) peuvent être connectés l'un après l'autre ou en combinaison parallèlement avec la bobine (7).

3. Système de commande électronique à aimant de commutation selon la revendication 2, **caractérisé en ce que** les composants électroniques sont des diodes (10, 11), des diodes zener (12), des condensateurs chargés (9) de manière particulière ou des résistances (8).

4. Système de commande électronique à aimant de commutation selon l'une des revendications précédentes, **caractérisé en ce qu'**un élément de commutation (T₁, T₂, T₃, T₄, T₅) dans le circuit de roue libre (A, B, C, D, E) est plus particulièrement un commutateur ou un transistor à l'aide duquel le circuit de roue libre (A, B, C, D, E) peut être connecté parallèlement à la bobine (7).

5. Système de commande électronique à aimant de commutation selon la revendication 4, **caractérisé en ce que** la position de commutation de l'élément de commutation (T₁, T₂, T₃, T₄, T₅) de chaque circuit de roue libre (A, B, C, D, E) peut être prédéfinie à l'aide d'un système de commande, notamment un système de commande à aimant de commutation.

6. Système de commande électronique à aimant de commutation selon l'une des revendications précédentes, **caractérisé en ce que** le capteur de déplacement (3) présente un nombre n de capteurs (S_{i=1..n}), plus particulièrement des commutateurs mécaniques, des barrières photoélectriques, des capteurs à effet Hall ou des capteurs inductifs qui sont disposés le long de l'induit (4) ou de la course de déplacement (H) à parcourir par les contacts de commutation (5) et à l'aide desquels peut être déterminée de manière discrète la position de l'induit (4) ou des contacts de commutation (5), un circuit de roue libre (A, B, C, D, E) étant associé à au moins un capteur Sᵢ.

7. Système de commande électronique à aimant de commutation selon la revendication 6, **caractérisé en ce que** sous l'effet du déplacement de l'induit (4), les capteurs (Sᵢ) du capteur de déplacement (3) disposés le long de la course de déplacement (H) émettent l'un après l'autre un signal donné au système de commande à aimant de commutation (1), à chaque fois après avoir détecté l'induit (4) ou après avoir détecté des repères, passages, ergots ou creux (4a, 5a) correspondants de l'induit (4).

8. Système de commande électronique à aimant de commutation selon l'une des revendications précédentes, **caractérisé en ce que** le capteur de déplacement (3) est un potentiomètre dont le curseur mobile est relié à l'induit (4), la tension prélevée sur le potentiomètre étant une indication de la position de l'induit (4).

9. Procédé pour la mise hors circuit d'un contacteur électronique au moyen du système de commande électronique à aimant de commutation selon l'une des revendications précédentes, **caractérisé en ce que** le système de commande à aimant de commutation (1) lance le processus de mise hors circuit du contacteur (2) dès que le signal de mise en circuit disparaît à l'entrée du système de commande à aimant de commutation (1).

10. Procédé pour la mise hors circuit d'un contacteur électronique selon la revendication 9, **caractérisé en ce qu'**au début du processus de mise hors circuit un premier circuit de roue libre (A) est connecté en parallèle avec la bobine (7), lequel évacue rapidement l'énergie accumulée dans la bobine (7), et que dès que le premier capteur (S₁) ou l'un des capteurs suivants (Sᵢ) détecte l'induit (4) ou les contacts de commutation (5) ou ses repères (4a, 5a), un autre circuit de commutation (B, C, D) composé d'une diode (10), d'un condensateur (9) chargé de manière particulière et/ou d'une résistance (8) est connecté en parallèle avec le premier circuit de roue libre (A) ou à la place de celui-ci.
